## Europäisches Patentamt
### European Patent Office
### Office européen des brevets

(19)

(11) Veröffentlichungsnummer: **0 334 037**
**A2**

(12)
# EUROPÄISCHE PATENTANMELDUNG

(21) Anmeldenummer: 89103035.5

(22) Anmeldetag: 22.02.89

(51) Int. Cl.⁴: **F25J 1/02 , F25D 3/10 , B23K 7/10**

(30) Priorität: 19.03.88 DE 3809290

(43) Veröffentlichungstag der Anmeldung:
27.09.89 Patentblatt 89/39

(84) Benannte Vertragsstaaten:
**AT BE DE ES FR GB IT LU**

(71) Anmelder: **MESSER GRIESHEIM GMBH**
**Hanauer Landstrasse 330**
**D-6000 Frankfurt/Main 1(DE)**

(72) Erfinder: **Grohmann, Paul, Dipl.-Ing.**
**Erlaufstrasse 23**
**A-2344 Maria-Enzersdorf(AT)**

(54) **Kühleinrichtung.**

(57) Kühleinrichtung für tiefsiedende, verflüssigte Gase, bei der die zu kühlende Flüssiggasleitung kontinuierlich von dem Kühlmittel umspült wird.

Fig.1

## Kühleinrichtung

Die Erfindung betrifft eine Kühleinrichtung nach dem Oberbegriff des Anspruches 1. Beim Schneiden mit einem Hochdruck-Flüssigsauerstoffstrahl, wie es z. B. aus der DE-OS 35 43 657 bekannt ist, wird der vom Tank im Siedezustand befindende Sauerstoff durch eine Hochdrucksauerstoffpumpe bis auf 500 bar Druck gebracht. Der Austrittsdruck aus der Schneiddüse wird durch ein Überströmventil bestimmt. Der hohe Impuls bewirkt eine große Schnittgeschwindigkeit dieses Schneid-Verfahrens. Um die Wärme, welche durch Reibung und Kompressionsarbeit entsteht, abzuführen, ist es notwendig den Sauerstoff mit einem Kühlmittel z. B. flüssigem Stickstoff zu kühlen. Die hierzu erforderliche Kühleinrichtung wird, um die Leitungswege zwischen Hochdruckpumpe, zwischen Kühleinrichtung und Schneidbrenner kurz zu halten zusammen mit diesen Aggregaten auf einen gemeinsamen Rahmen gebaut und mit der Führungsschneidmaschine mitbewegt. Daher soll dieser Anlagenteil leicht sein und einen niedrigen Schwerpunkt aufweisen.

Aus der US-PS 2,205,499 ist eine Kühleinrichtung bekannt, bei der die zu kühlende spiralförmige Gasleitung in einem mit flüssiger Luft gefüllten, isolierten Behälter eingetaucht ist. Die Verwendung eines derartigen Konstruktionsprinzips zum Kühlen einer Hochdruckflüssiggasleitung führt aufgrund der großen Wandstärke des Hochdruckrohres zu einem großen Durchmesser der Leitungsspirale. Dadurch weist auch der Behälter, in den die Spirale eingetaucht wird, einen großen Durchmesser und damit ein großes Bauvolumen auf.

Hinzu kommt, daß das in der Behältermitte vorhandene Kühlmittel nicht zur Kühlung beiträgt und als "totes Gewicht" mitgeführt werden muß. Letzteres Problem könnte z. B. durch einen eingesetzten Verdrängungskörper gelöst werden, das große Bauvolumen ist bei einer derartigen Lösung aber weiterhin vorhanden.

Der Erfindung liegt die Aufgabe zugrunde, eine Kühleinrichtung zu schaffen, die eine niedrige Bauhöhe und eine platzsparende Konstruktion bei geringem Gewicht ermöglicht.

Diese Aufgabe wird bei einer gattungsgemäßen Kühleinrichtung durch die kennzeichnenden Merkmale des Anspruches 1 gelöst.

Vorteilhafte Weiterbildungen der Erfindung sind in den Unteransprüchen angegeben.

Durch die vorgesehene Kühlgasbehälter-Kühlleitungssegmentanordnung wird es vorteilhaft möglich, die zu kühlende Gasleitung kontinuierlich mit einem flüssigen Kühlmittel zu umspülen und so einerseits einen optimalen Kühleffekt zu erzielen und andererseits eine Konstruktion zu schaffen, die eine niedrige Bauhöhe sowie ein niedriges Gewicht aufweist und bei der der Innenraum derart genutzt werden kann, daß z. B. dort die Hochdruckpumpe angeordnet ist.

Ein Ausführungsbeispiel der Erfindung ist in der Zeichnung dargestellt und wird im folgenden näher beschrieben:
Es zeigen

Fig. 1 eine Seitenansicht der Kühleinrichtung

Fig. 2 eine Draufsicht der Kühleinrichtung

Fig. 3 einen Schnitt längs der Linie A-A in Fig. 2

Fig. 4 einen Schnitt längs der Linie B-B in Fig. 2

Die in ihrer Gesamtheit mit 10 bezeichnete Kühleinrichtung weist zwei isolierte Kühlgasbehälter 11, 12 auf, die vorzugsweise als Standrohre ausgebildet und auf einer Grundplatte befestigt sind und an deren Anschlüssen 13 bzw. 14 eine nicht näher dargestellte Kühlgasversorgung angeschlossen ist, zur Zuführung eines tiefsiedenden verflüssigten Kühlgases, vorzugsweise flüssiger Stickstoff. Dabei erfolgt die Versorgung mit dem flüssigen Stickstoff gleichmäßig mittels Standmessung. Die Standrohre 11, 12 sind über ein gemeinsames Rohr 15 verbunden, über das in an sich bekannter Weise der entstehende gasförmige Stickstoff abtransportiert werden kann.

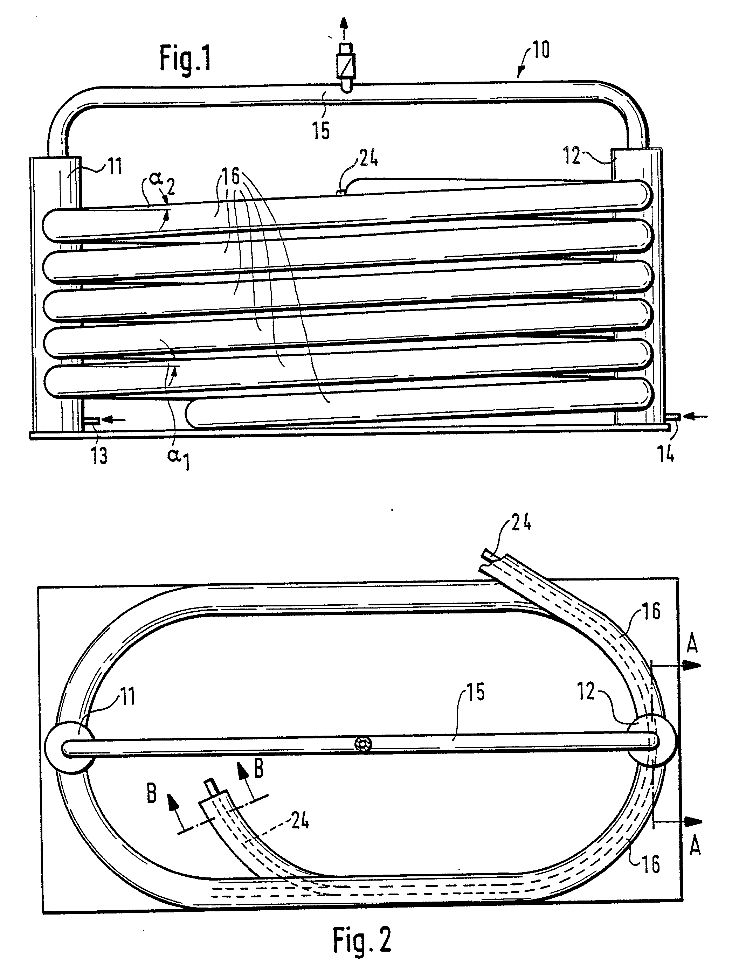

Die Standrohre 11, 12 dienen gleichzeitig als Halterung für die vakuumisolierten Kühlleitungssegmente 16, die gemäß Fig. 1 parallel zueinander und unter einem Winkel $\alpha_1$ von vorzugsweise 3 bis 30° ansteigend angeordnet sind. Dadurch wird vorteilhaft erreicht, daß der ausgasende Stickstoff durch den Auftrieb in die Standrohre 11, 12 transportiert wird. Besonders günstig hat sich dabei herausgestellt, wenn der Winkel $\alpha_1$ von Kühlleitungssegment zu Kühlleitungssegment größer wird, z. B. von einem Winkel $\alpha_1$ von 1° kontinuierlich ansteigt auf einen Winken $\alpha_2$ von 10°.

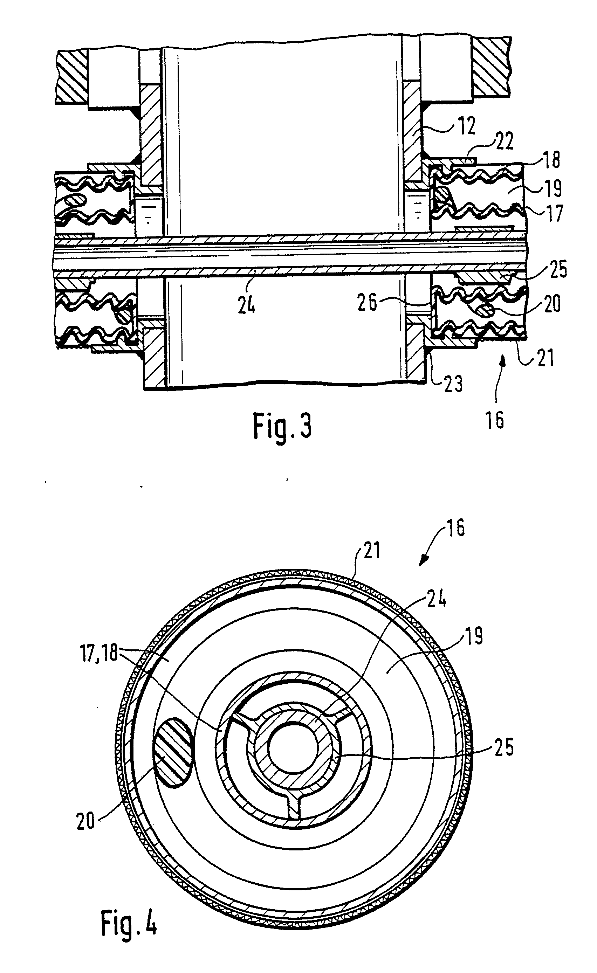

Entsprechend den Fig. 3 und 4 weisen die vakuumisolierten Kühlleitungssegmente 16 einen inneren 17 und einen äußeren 18 Wellrohrschlauch auf, wobei die Enden 19 der Wellrohrschläuche vakuumisoliert verbunden/verschlossen sind. In dem zwischen den Schläuchen 17, 18 liegenden Vakuum 19 ist als Abstandhalter eine Kunststoffspirale 20 angeordnet. Der äußere Wellrohrschlauch 18 ist von einer Edelstahlumflechtung 21 umgeben. Über Halter 22, die an den Schlauchenden 19 flüssigkeitsdicht befestigt sind, sind die Kühlleitungssegmente 16 an Öffnungen in den Standrohren 11, 12 z. B. durch Schweißungen 23 angeschlossen.

Die zu kühlende Flüssiggasleitung 24 ist, wie insbesondere Fig. 2 zeigt, kontinuierlich (vorzugsweise spiralförmig) durch die Kühlsegmente und die Kühlgasbehälter 11, 12 geführt, wobei entsprechend Fig. 3 die Flüssiggasleitung 24 die Kühlgasbehälter 11, 12 durchdringt und innerhalb der Behälter 11, 12 nicht unterbrochen ist. Innerhalb der Kühlleitungssegmente 16 ist die vorzugsweise als Hochdruckkupferleitung ausgebildete Flüssiggasleitung 24 durch sternförmige Abstandshalter 25 aus Kunststoff gehalten und dort genau zentriert, so daß zwischen Flüssiggasleitung 24 und innerem Wellschlauch 17 ein Ringraum für den Kühlstickstoff vorhanden ist.

Die oben beschriebene Anordnung bietet den Vorteil, lange, zu kühlende Flüssiggasleitungen verlegen zu können, ohne auf den Platz innerhalb der Rohrspirale verzichten zu müssen. Ferner wird das Gewicht geringer, da sich der Stickstoffanteil bei dieser Ausführung nur entlang der zu kühlenden Flüssiggasleitung befindet.

Durch den großen Rohrradius wird die Konstruktion niedrig und somit liegt der Schwerpunkt günstig. Schließlich sei die einfache Erweitungsmöglichkeit des Systems zu erwähnen. Unterschiedliche Dimensionierung ist durch Verlängern oder Verkürzen der Konstruktion mit einigen Segmenten ohne weiteres erreichbar.

Damit ist die beschriebene Kühleinrichtung besonders vorteilhaft verwendbar in einer Einrichtung zum Schneiden von Werkstücken mit flüssigem Sauerstoff der mit flüssigem Stickstoff gekühlt wird, wobei bevorzugt die Kühleinrichtung auf der Schneidmaschine angeordnet und mit dieser bewegbar ist.

**Ansprüche**

1. Kühleinrichtung zum Kühlen eines tiefsiedenden, verflüssigten Gases,
dadurch gekennzeichnet,
daß die Kühleinrichtung (10) zwei Kühlgasbehälter (11, 12) aufweist, die durch vakuumisolierte Kühlleitungssegmente (16) miteinander verbunden sind und daß die Flüssiggasleitung (24) kontinuierlich durch die Kühlleitungssegmente (16) und die Kühlgasbehälter (11, 12) geführt ist.

2. Kühleinrichtung nach Anspruch 1,
dadurch gekennzeichnet,
daß die Kühlleitungssegmente (16) parallel zueinander angeordnet sind.

3. Kühleinrichtung nach Anspruch 1 oder 2,
dadurch gekennzeichnet,
daß die Kühlleitungssegmente (16) unter einem Winkel $\alpha_1/\alpha_2$ von vorzugsweise 3 bis 30$^\circ$ ansteigend angeordnet sind.

4. Kühleinrichtung nach Anspruch 3,
dadurch gekennzeichnet,
daß der Winkel $\alpha_1/\alpha_2$ von Kühlleitungssegment zu Kühlleitungssegment größer wird.

5. Kühleinrichtung nach einem der Ansprüche 1 bis 4,
dadurch gekennzeichnet,
daß die Kühlgasbehälter (11, 12) als Standrohre ausgebildet sind.

6. Kühleinrichtung nach einem der Ansprüche 1 bis 5,
dadurch gekennzeichnet,
daß die vakuumisolierten Kühlleitungssegmente (16) einen inneren (17) und einen äußeren (18) Wellrohrschlauch aufweisen, daß die Enden (19) der Wellrohrschläuche (17, 18) verbunden sind und im dazwischenliegenden Vakuum (19) gegebenenfalls eine Kunststoffspirale (20) als Abstandshalter angeordnet ist und daß der äußere Wellrohrschlauch (18) von einer Edelstahlumflechtung (21) umgeben ist.

7. Kühleinrichtung nach einem der Ansprüche 1 bis 6,
dadurch gekennzeichnet,
daß die Flüssiggasleitung (24) spiralförmig durch die Kühlleitungssegmente (16) und die Kühlgasbehälter (11, 12) geführt ist.

8. Kühleinrichtung nach einem der Ansprüche 1 bis 7,
dadurch gekennzeichnet, daß die, vorzugsweise als Hochdruckkupferleitung, ausgebildete Flüssiggasleitung (24) über sternförmige Abstandshalter (25) im inneren Wellschlauch (17) gehalten ist.

9. Kühleinrichtung nach einem der Ansprüche 1 bis 8,
gekennzeichnet durch
die Verwendung in einer Einrichtung zum Schneiden von Werkstücken mit flüssigem Sauerstoff, der mit flüssigem Stickstoff gekühlt wird, wobei bevorzugt die Kühleinrichtung auf der Schneidmaschine angeordnet und mit dieser bewegbar ist.

Fig.1

Fig.2

EP 0 334 037 A2

Fig. 3

Fig. 4